# EUROPÄISCHE PATENTANMELDUNG

(11) **EP 0 966 878 A1**
(43) Veröffentlichungstag der Anmeldung: **29.12.1999**
(21) Anmeldenummer: 99890203.5
(22) Anmeldetag: 23.06.1999
(51) Int. Cl.: A01D 87/12, A01F 29/00

(54) **Ballenabrollmaschine für Heu, Stroh oder Silagegut**

(30) Priorität: 24.06.1998 AT 109798; 15.10.1998 AT 172398
(71) Anmelder: Auer Landmaschinenbau Gesellschaft m.b.H., 4202 Hellmonsödt (AT)
(72) Erfinder: Stummer, Günter, 4180 Zwettl a.d. Rodl (AT)
(74) Vertreter: Patentanwälte BARGER, PISO & PARTNER

(57) **Zusammenfassung**

Die Erfindung betrifft eine Ballenabrollmaschine für Heu, Stroh oder Silagegut mit einem Kratzboden (6) und einer Auflösevorrichtung (5) für den Ballen (8), wobei die Zufuhr und Bewegung der Ballens mittels des Kratzbodens erfolgt, der gegebenenfalls mit Querleisten (4) ausgerüstet ist und die Auflösevorrichtung Zinken (1) aufweist.

Sie ist dadurch gekennzeichnet, daß die Zinken (1) im wesentlichen eine Drehbewegung um eine Achse (M'), die parallel zur Ballenachse liegt, vollführen, daß sie zumindest in dem dem Ballen (8) zugewandten Quadranten ihrer Drehbewegung durch Schlitze eines Abdeckbleches (3) treten und dabei federnd gelagert oder ausgebildet sind und/oder im Bereich des Kontaktes mit dem Ballen um maximal 30 % bis 50 % des Radius des zumindest in diesem Bereich kreisbogenförmigen Abstreifbleches (3) ragen, wobei der Mittelpunkt (M) des Abstreifbleches um 80 % bis 120 %, bevorzugt etwa 100 % dieses Radius des Abstreifbleches (3) über der Auflagehöhe (16) des Kratzbodens (6) liegt.

## Beschreibung

Die Erfindung betrifft eine Ballenabrollmaschine für Heu, Stroh oder Silagegut mit einem Kratzboden und einer Auflösevorrichtung für den Ballen, wobei die Zufuhr und Bewegung der Ballens mittels des Kratzbodens erfolgt, der gegebenenfalls mit Querleisten ausgerüstet ist und die Auflösevorrichtung Zinken aufweist.

Eine derartige Ballenabrollmaschine ist aus der DE 25 56 234 A bekannt. Die Auflösevorrichtung ist ein Schrägförderer, der im wesentlichen aus parallel zueinander verlaufenden Gurten und dazwischen angeordneten Zinken besteht. Die Auflöseleistung dieser als kombinierter Transport- und Auflösevorrichtung konzipierten Maschine ist trotz relativ hohem Energieeinsatz nur gering, da die Zinken des Schrägförderers zufolge dessen Konstruktion nur geringe Eingriffstiefe haben können.

In den letzten Jahren ist man in der Landwirtschaft mehr und mehr dazu übergegangen, Heu, Stroh und Silagegut in Ballenform zu handhaben. Es können diese im wesentlichen zylindrischen Ballen dabei umwickelt sein oder durch Verpressen in ihre Form gebracht und so stabilisiert worden sein. Die Vorteile dieser Technik sind unbestritten, doch gibt es bis heute Probleme bei der Benutzung derartiger Ballen.

Entsprechende Abrollmaschinen weisen entweder, so wie die von Calvet oder Kuhn, Kratzböden auf, die mit Leisten und Zähnen bestückt sind und die Ballen bewegen und auflösen. Der Hauptvorteil dieses Systems liegt im geringen Leistungsbedarf, der Nachteil daran, daß stark geprßte Ballen oder im Winter gefrorene Ballen nur sehr schwer, langsam und zum Teil gar nicht abgewickelt werden können.

Andere Systeme, wie die von Wolvo, Castor und RONDO-DAN arbeiten mit speziellen Schneiden oder Fräsen und weisen dabei einen Kratzboden auf, der nur dazu dient, den Gutballen zur Zerkleinerungs- und Auflösevorrichtung zu bringen. Dieses System arbeitet auch bei stark gepreßten Ballen und bei gefrorenen Ballen zufriedenstellend, benötigt aber eine sehr hohe Antriebsleistung, die nicht überall zur Verfügung steht.

Besteht daher ein Bedarf an einem System, das mit geringer Antriebsleistung auch in der Lage ist, gefrorene oder stark gepreßte Ballen mit genügender Auflöseleistung zu schaffen.

Die Erfindung bezweckt eine Ballenabrollmaschine zu schaffen, die tatsächlich mit geringer Antriebsleistung eine hohe Auflöseleistung bei schonender Gutbehandlung erzielt.

Dazu ist erfindungsgemäß vorgesehen, daß die Zinken im wesentlichen eine Drehbewegung um eine Achse, die parallel zur Ballenachse liegt, vollführen, daß sie zumindest in dem dem Ballen zugewandten Quadranten ihrer Drehbewegung durch Schlitze eines Abdeckbleches treten und dabei federnd gelagert oder ausgebildet sind und/oder im Bereich des Kontaktes mit dem Ballen um maximal 30 % bis 50 % des Radius des zumindest in diesem Bereich kreisbogenförmigen Abstreifbleches ragen, wobei der Mittelpunkt des Abstreifbleches um 80 % bis 120 %, bevorzugt etwa 100 % dieses Radius des Abstreifbleches über der Auflagehöhe des Kratzbodens liegt.

Durch diese Maßnahme können die Zinken bei zu großem Widerstand des Ballens federnd hinter die Abdeckung zurücktreten, so daß es nicht notwendig ist, eine Antriebsleistung vorzusehen, die jedenfalls eine Bewegung und ein Eindringen der Zinken in den Ballen gestattet, wobei aber durch die Federkraft sichergestellt ist, daß der Gutballen ausreichend aufgelockert und aufgelöst wird, bzw. ist bei der Variante mit fixen Zinken eine Überlastung durch die gegebene Geometrie ausgeschlossen.

Es wird in einer bevorzugten Ausgestaltung vorgesehen, daß zumindest in dem Bereich, in dem die Ballenauflösung erfolgt, die Zinken mit der Normalen auf das Abstreifblech einen positiven Winkel einschließen, d.h. daß die Zinkenspitze in Bewegungsrichtung vor dem Radius des Abstreifbleches durch den Durchtrittspunkt der Zinke liegt.

Die Erfindung wird im folgenden an Hand der Zeichnung näher erläutert. Dabei zeigt
die Fig. 1 eine erfindungsgemäße Ballenabrollmaschine im Schnitt normal zur Ballenachse,
die Fig. 2 eine Ansicht ähnlich der Fig. 1 für eine erfindungsgemäße Ballenabrollmaschine, die fahrbar ausgebildet ist,
die Fig. 3 eine Variante einer erfindungsgemäßen Vorrichtung, bei der die oben geforderte Winkellage durch einen Versatz zwischen dem Mittelpunkt des Abstreifbleches und dem Mittelpunkt der Zinkenwelle erreicht wird und
die Fig. 4 eine Variante einer erfindungsgemäßen Vorrichtung, bei der die beiden genannten Mittelpunkte zusammenfallen, die Zinken aber durch eine Kulissenführung während ihres Umlaufes ihre Winkellage ändern.

Eine erfindungsgemäße Ballenabrollmaschine besteht im wesentlichen aus einer Auflösevorrichtung 5 und einem Kratzboden 6, die passend auf einem Gestell 7 montiert sind. Der Kratzboden 6 weist bevorzugt Querleisten 4 auf, mit denen ein Gutballen 8 zur Auflösevorrichtung 5 gebracht wird.

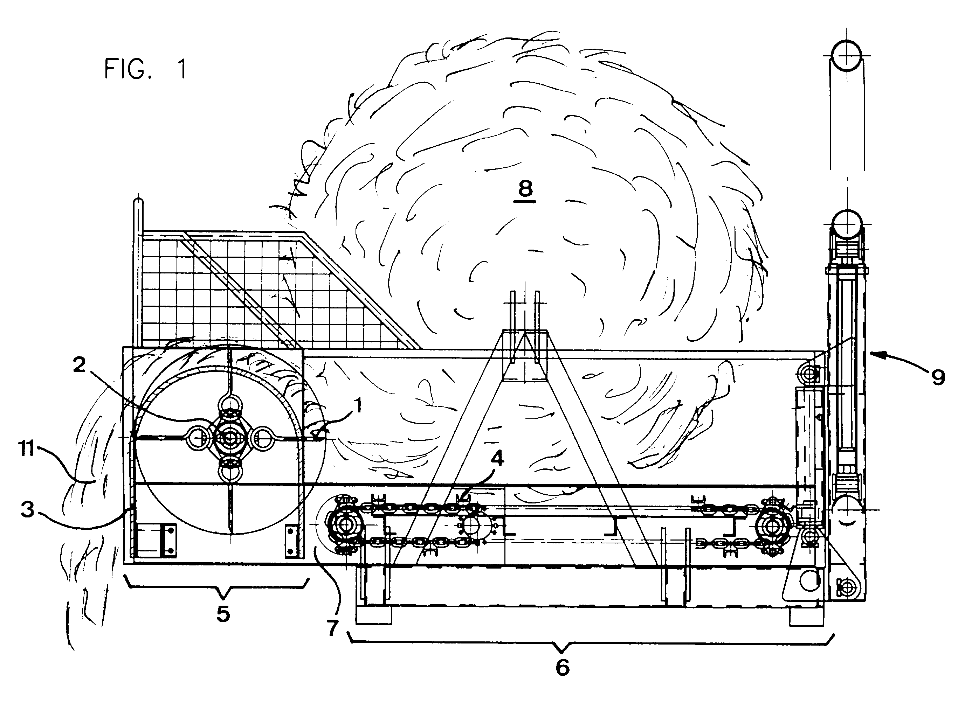

Die Auflösevorrichtung 5 besteht bei der in Fig. 1 gezeigten Ausführungsform im wesentlichen aus einer drehbar gelagerten Welle 2, an der eine Vielzahl von Zinken 1 federnd befestigt sind. Im dargestellten Ausführungsbeispiel sind vier Reihen von Zinken 1 im gleichen Abstand von jeweils 90° entlang des Umfanges verteilt, diese können jedoch auch in einer anderen Anzahl und damit einem anderen Winkelabstand zueinander angeordnet sein.

Es müssen die im axialen Abstand voneinander angeordneten Zinken einer "Reihe" nicht zueinander fluchtend angeordnet sein, sondern können mit einem Winkelversatz angeordnet sein, um die Ausbildung von Belastungsspitzen beim gleichzeitigen Auftreffen auf den Gutballen 8 zu vermeiden.

Die Welle 2 ist vor einem Kontakt mit dem Gut und dem Gutballen 8 durch ein Abstreifblech 3 geschützt, das in jeweils den Ebenen, in denen Zinken 1 vorgesehen sind, schlitzförmige Ausnehmungen aufweist, durch die die Zinken 1 durchtreten können. Das Abstreifblech 3 weist eine Form und eine Dimensionierung auf, die es den Zinken 1 ermöglicht, in dem Bereich, in dem sie sich am nächsten zum Gutballen 8 befinden, aus dem Blech durch die Schlitze zu ragen und so die Auflösung des Gutballens 8 zu bewirken.

Durch das Abstreifblech 3 kann es zu keiner zu starken Anpressung des Gutballens 8 an die Welle 2 bzw. an die mit ihr mitrotierenden Teile der Auflösevorrichtung 5 kommen, so daß die Antriebsleistung für die Auflösevorrichtung 5 gering gehalten werden kann.

Ohne Abstreifblech 3 erfolgt auch bei hohen Anpreßdrücken des Gutballens 8 selbst bei großer Antriebsleistung der Auflösevorrichtung 5 keine wesentliche Erhöhung der Auflöseleistung, sondern es wird die zusätzliche Antriebsleistung nur zum Überwinden des hohen Anpreßdruckes und der damit verbundenen Reibung dissipiert. Man erreicht durch die Verhinderung dieser reinen Verlustleistung mit der erfindungsgemäßen Vorrichtung auch mit geringen Antriebsleistungen sehr hohe Auflöseleistungen.

Dazu kommt, daß durch das Zusammenwirken des Abstreifbleches 3 mit der federnden Ausgestaltung der Zinken 1 nicht die Gefahr besteht, daß diese im Gutballen stecken bleiben, wenn die Anbtriebsleistung für gefrorene oder stark gepreßte Ballen zu gering ist, da dann die Zinken 1 durch das Federn hinter die geschlitzte Abstreifwand 3 treten, aber noch immer mit der Federkraft an der Auflösung des Gutballens arbeiten.

Die Zinken können entweder in sich federnd ausgebildet sein oder sie sind, was bevorzugt wird, an ihrem wellennahen Ende als Schraubfeder ausgebildet, die auf Torsion beansprucht wird, es kann selbstverständlich auch eine Kombination beider Federmöglichkeit vorgesehen sein.

Die Kratzbodenvorrichtung 6 ist aus der Landmaschinentechnik seit langem bekannt und bedarf keiner näheren Erläuterung. Zur Auflösevorrichtung 5 kann gesagt werden, daß sie Ähnlichkeiten mit den Pick-up-Trommeln der Ladewägen aufweist, wobei aber die auftretenden Kräfte und Fördervolumina ganz andere sind.

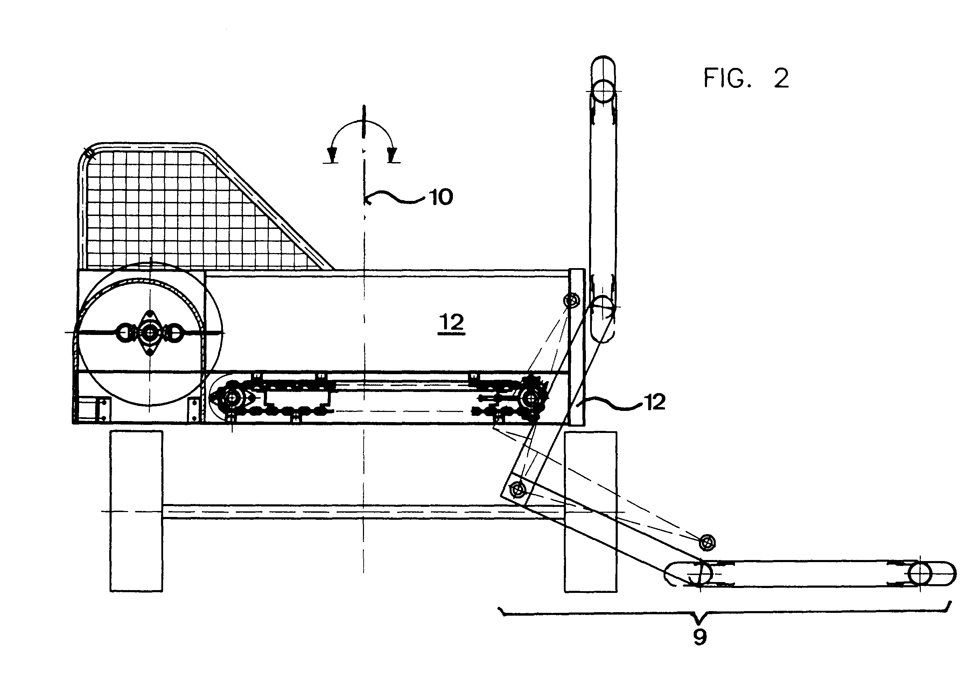

In Fig. 1 und speziell in Fig. 2 ist eine bevorzugt hydraulische Hebevorrichtung 9 für einen Gutballen 8 dargestellt. Derartige Hebevorrichtungen sind auch bei den eingangs genannten vorbekannten Ballenauflösevorrichtungen in ähnlicher Form in Verwendung.

In Fig. 2 ist die Vorrichtung gemäß Fig. 1 mit einer Hebevorrichtung 9 in zwei Stellungen eingezeichnet. Diese Vorrichtung ist samt Ballenabrollmaschine bei der Variante gemäß Fig. 2 um eine Hochachse 10 drehbar auf einem Anhänger montiert. Die Vorrichtung gemäß Fig. 1 ist an der Dreipunktaufhängung eines Traktors befestigbar.

Das durch die Auflösevorrichtung 5 vom Ballen 8 abgetrennte Gut 11 (Fig. 1) wird von den Zinken 1 über das Abstreifblech 3 aus dem Bereich der Vorrichtung gebracht und kann beispielsweise direkt in eine Futterrinne fallen, entlang der sich die Vorrichtung, während sie den Ballen 8 abrollt, entlang bewegt. Ein Förderband, daß das herabfallende, abgetrennte Gut zu einer gewünschten Abladestelle bringt, ist selbverständlich ebenfalls anwendbar.

In einer Ausgestaltung der Erfindung, die keine Hebevorrichtung 9 aufweist, sind die Bordwände 12 abklappbar oder abnehmbar ausgebildet, um beispielsweise mittels eines Traktors mit Frontlader oder mit Ballenspieß leicht und problemlos beladen werden zu können.

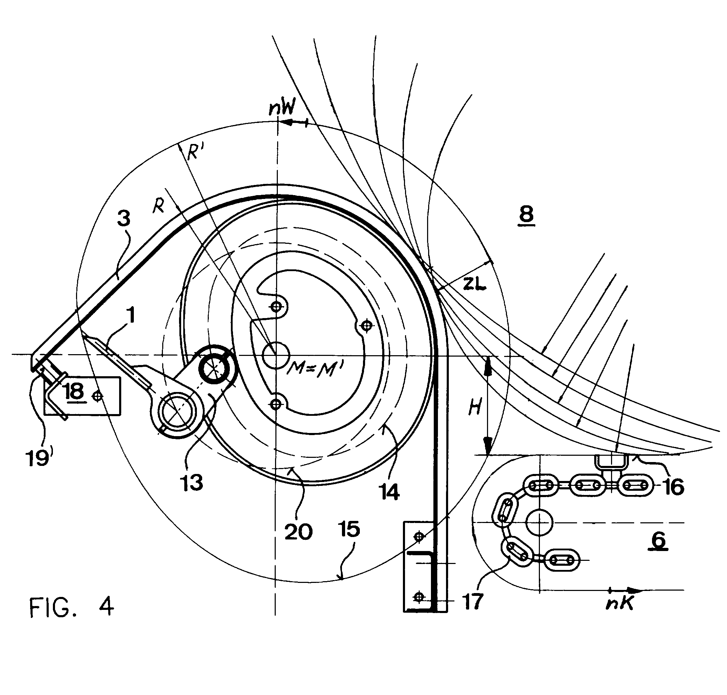

Es wird bevorzugt, daß die federnden Zinken 1 um eine Welle 2 kreisen, doch ist es durchaus möglich, in Analogie zu den Ladewegen, die Zinken entlang einer Kulisse zu verfahren und während ihrer Bewegung zu verschwenken, um zu unterschiedlichen Bewegungsgeschwindigkeiten und Eingriffswinkeln mit dem Ballen 8 zu kommen, wie dies anhand einer erfindungsgemäßen Ausgestaltung in Fig. 4 dargestellt ist. Auch dabei können die Zinken vorteilhafterweise so federnd ausgestaltet sein, daß sie zumindest im wesentlichen hinter das Abstreifblech 3 treten können, wenn der Widerstand beim Eindringen bzw. beim Bewegen im Gutballen zu groß wird.

Der Antrieb, sowohl für den Kratzboden 6 als auch die Auflösevorrichtung 5, kann mittels Hydraulikmotors oder von der Zapfwelle abgeleitet werden und ist in Kenntnis der Erfindung vom Fachmann der Landmaschinentechnik leicht auszulegen und aus den vorhandenen standardmäßig angebotenen Antrieben auszuwählen.

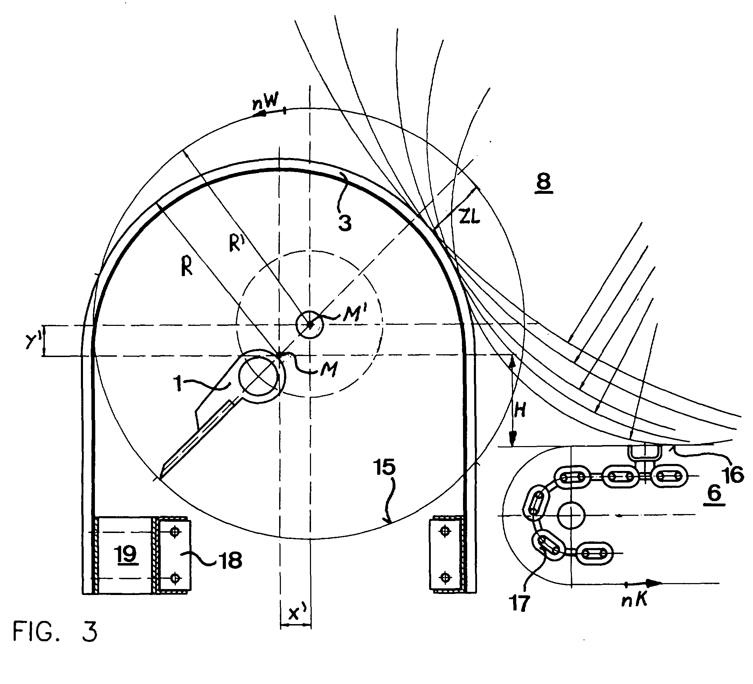

In Fig. 3 ist schematisch ein Ballen 8 mit den im Laufe seines Auflösens immer kleiner werdenden Radien dargestellt. Dieser Ballen 8 wird durch einen Kratzboden 6 an ein Abstreifblech 3 gedrückt. Das Abstreifblech 3 hat im Querschnitt im wesentlichen die Form eines auf den Kopf gestellten "U" oder "V" und weist über seine normal zur Zeichenblattebene gerichteten Längserstreckung eine Vielzahl von Schlitzen auf, die den Durchtritt von Zinken 1 erlauben. Das Abstreifblech 3 ist in seinem oberen Bereich zumindest im wesentlichen halbkreisförmig gebogen, wobei der Mittelpunkt des Halbkreises, zugleich die Projektion der Kreiszylinderachse, der Punkt M ist.

Die Zinken 1, dargestellt ist nur einer, üblicherweise sind es zumindest drei, aber auch bis zu sechs gleichmäßig um den Umfang verteilte Zinkenreihen, laufen, auf passende Weise gelagert, um die Achse M' um und überstreichen somit mit ihren Spitzen den Hüllkreis 15.

Die Achse M' ist gegenüber der Achse M in Richtung zum Gutballen 8 und nach oben versetzt, wobei dieser Versatz in einem Winkel von bevorzugt zwischen 30° und 60°, gerechnet von der Horizontalen, besonders bevorzugt von etwa 45° liegt.

Es sind dabei folgende Größenrelationen zu berücksichtigen bzw. einzuhalten: Die heute gängigen Gutballen weisen im allgemeinen einen Anfangsradius zwischen etwa 600 mm und etwa 900 mm, zumeist zwischen 700 mm und 800 mm, auf. Zufolge des doch beträchtlichen Gewichtes (Ballen aus feuchtem Silagegut haben eine Masse von bis zu einer Tonne) eines solchen Gutballens weicht er, wenn er am Kratzboden 6 aufliegt, beträchtlich vom Kreisquerschnitt ab, was durch die Bewegung des Kratzbodens, das Auflaufen des Ballens am Abstreifblech 3 und die Wirkung der Zinken 1 noch verstärkt wird, so daß die in Fig. 1 dargestellten Umrisse des Gutballens 8 nur als idealisierte Näherungen gesehen werden dürfen.

Es hat sich bei der erfindungsgemäßen Ballenabrollmaschine in der Praxis als vorteilhaft erwiesen, daß für den kreisbogenförmigen Teil des Abstreifbleches 3 ein Radius von 25 bis 45 % des oben genannten Ballenradius zu dessen Bearbeitungsbeginn gewählt wird. In diesem Radiusbereich ist für ausreichenden Kontakte zwischen dem Ballen und dem Abstreifblech 3 gesorgt und es verlagert sich mit kleiner werdendem Gutballen 8 der Berührpunkt bzw. der Berührbereich zwischen dem Gutballen und dem Abstreifblech in Gebiete, in denen die Gefahr, den Gutballen durch die Eindringkraft der Zinken von seinem Lager abzuheben und unter Unständen auch von der Maschine zu werfen, geringer wird, da die Richtung der Resultierenden der auf den Ballen wirkenden Kräfte mehr und mehr dazu neigt, den Ballen in Rotation zu versetzen, nicht aber ihn über das Abstreifblech zu bewegen.

Dazu ist es günstig, daß auch zwischen dem Kratzboden 6 und dem Mittelpunkt bzw. der Achse M des Abstreifbleches 3 verschiedene Relationen eingehalten werden. Besonders wichtig ist hier der vertikale Abstand H zwischen dem Mittelpunkt M des Abstreifbleches 3 und der Auflageebene 16 des Kratzbodens 6. Es haben sich für diesen Abstand Werte in der Größenordnung des Radius des kreisbogenförmigen Teils des Abstreifbleches 3 gut bewährt.

Ein anderes, die Dynamik des Auflöseprozesses beeinflußendes Kriterium ist das Verhältnis zwischen der Geschwindigkeit des Kratzbodens 6 zur Umlaufgeschwindigkeit der Spitzen der Zinken 1. Es soll die Geschwindigkeit der Zinkenspitzen (gemessen in m/min.) das 2 bis 3-fache der Geschwindigkeit der Förderkette 17 des Kratzbodens 6 (ebenfalls gemessen in m/min.) betragen.

Schließlich ist ein für die Praxis wesentlicher Punkt der Erfindung darin zu sehen, daß auf der Abwurfseite des Abstreifbleches 3 nicht nur dessen Außenfläche keine Querrippen aufweist, sondern daß es auch auf seinem Innenumfang keine in Richtung der Achse M (normal zur Zeichenebene) verlaufende Bauelemente im näheren Bereich des Abstreifbleches 3 aufweist. Derartige Verstärkungselemente müssen mit einem größeren Abstand vom Abstreifblech 3 vorgesehen werden, wobei die Verbindung eines solchen Versteifungselementes 18 zu den einzelnen Streifen des Abstreifbleches 3 durch paralell zur Zeichenebene liegende Abstandhalter 19 zu erfolgen hat.

Wenn diese Maßnahmen nicht beachtet werden, kommt es unvermeidlich zu einem Aufbau von losgelöstem Gut 11 im "Inneren" des Abstreifbleches, das sich fortschreitend bis in den Bereich des Zinkenkreises 15 aufbaut und schließlich den Betrieb der Vorrichtung stört.

In diesem Bereich ist auch ein Unterschied zur Variante nach Figur 4 zu bemerken: durch die bessere Vorbestimmbarkeit des Winkels zwischen den Zinken 1 und dem Abstreifblech 3 bzw. dem Radius auf das Abstreifblech 3 am Ort des Zinkendurchtrittes ist es bei der Variante mit Kulissenführung (Fig. 4) besonders im Abwurfbereich möglich, einen solchen Winkel zu wählen (im wesentlichen zusammenfallend mit der Normalen auf das Abstreifblech), daß so gut wie kein Gut durch die schlitzförmigen Ausnehmungen des Abstreifbleches ins Innere gelangt, sondern das vom Gutballen 8 abgelöste Gut im wesentlichen zur Gänze am Außenmantel des Abstreifbleches 3 bis zu dessen Ende befördert wird. Dementsprechend wurde in Figur 4 auch die am Abwurfende eingezeichnete Längsversteifung 18 nur mit einem im Vergleich zum Abstandhalter 19 der Fig. 1 kurzen Abstandhaltern 19' vom Abstreifblech 3 abgesetzt, was bei der Ausführungsform gemäß Figur 1 zu Betriebsproblemen führen könnte.

Die Kulissenführung der Zinken 1 wie sie in Fig. 4 dargestellt ist, ist im Landmaschinenbau an sich gut bekannt und bedarf hier nur einer kurzen Erläuterung: Die Zinken 1 sind an Zinkenhebeln 13 im festen Winkel montiert, wobei die Zinken entlang der Zinkenkreisführung 20 um den Mittelpunkt M' (hier mit M zusammenfallend) umlaufen und ihre Winkellage bezüglich des momentanen Radius durch das Umlaufen eines Bolzens oder einer Rolle des Zinkenhebels 13 in einer Kulisse mit einer Kulissenmitte 14 bestimmt wird.

Auf diese Weise kann vom Fachmann der Kinematik ein passender Hüllkreis für die Spitzen der Zinken 1 samt passender Winkellage der Zinken bezüglich des Abstreifbleches 3 bestimmt werden.

Die Erfindung ist nicht auf die dargestellten Ausführungsbeispiele beschränkt, sondern kann verschiedentlich geändert werden. so ist es in Kenntnis der Erfindung für den Fachmann auf dem Gebiete der Kinematik möglich, eine andere Form der Kulissenführung zu wählen als die dargestellte. Die Zinken können anders ausgeführt sein als abgebildet und das Abstreifblech muß nicht, wie dargestellt, aus im wesentlichen U-förmigen Elementen mit nach außen gerichteten Schenkeln aufgebaut sein.

Das Abstreifblech 3 muß nicht unbedingt aus Blech bestehen, es kann Scheuerleisten oder Rippen od.dergl. aufweisen, um leicht und doch stabil zu sein. Um den Zutritt von Schmutz zur Achse 2 zu verhindern, ist es vorzugsweise, so wie dargestellt, bis unter die Achse 2 bzw. unter das Untertrum des Kratzbodens 6 gezogen, doch muß dies nicht der Fall sein. Es kann, speziell für einen leichteren Zugang zur Achse 2, mehrteilig aufgebaut sein.

## Patentansprüche

1. Ballenabrollmaschine für Heu, Stroh oder Silagegut mit einem Kratzboden (6) und einer Auflösevorrichtung (5) für den Ballen (8), wobei die Zufuhr und Bewegung der Ballens mittels des Kratzbodens erfolgt, der gegebenenfalls mit Querleisten (4) ausgerüstet ist und die Auflösevorrichtung Zinken (1) aufweist, dadurch gekennzeichnet, daß die Zinken (1) im wesentlichen eine Drehbewegung um eine Achse (M'), die parallel zur Ballenachse liegt, vollführen, daß sie zumindest in dem dem Ballen (8) zugewandten Quadranten ihrer Drehbewegung durch Schlitze eines Abdeckbleches (3) treten und dabei federnd gelagert oder ausgebildet sind und/oder im Bereich des Kontaktes mit dem Ballen um maximal 30 % bis 50 % des Radius des zumindest in diesem Bereich kreisbogenförmigen Abstreifbleches (3) ragen, wobei der Mittelpunkt (M) des Abstreifbleches um 80 % bis 120 , bevorzugt etwa 100 % dieses Radius des Abstreifbleches (3) über der Auflagehöhe (16) des Kratzbodens (6) liegt.

2. Ballenabrollmaschine nach Anspruch 1, dadurch gekennzeichnet, daß die Zinken (1) im Bereich ihrer größten Durchtrittshöhe (ZL) mit der Normalen auf das Abstreifblech einen positiven Winkel einschließen, d.h. daß die Zinkenspitze in Bewegungsrichtung vor dem Radius des Abstreifbleches (3) durch den Durchtrittspunkt der Zinke liegt.

3. Ballenabrollmaschine nach Anspruch 1 oder 2, dadurch gekennzeichnet, daß in dem Bereich des Wiedereintrittes der Zinken (1) hinter das Abstreifblech (3) die Zinken mit der Normalen auf das Abstreifblech einen negativen Winkel einschließen.

4. Ballenabrollmaschine nach einem der vorangehenden Ansprüche, dadurch gekennzeichnet, daß die Geschwindigkeit der Zinkenspitzen (4), gemessen in m/min., das 2 bis 3-fache der Geschwindigkeit der Förderkette (7) des Kratzbodens (2), ebenfalls gemessen in m/min., betragt.

5. Ballenabrollmaschine nach Anspruch 1, dadurch gekennzeichnet, daß die Zinken (1) mittels Federn, bevorzugt mittels Schraubenfedern, an einer Achse (2) befestigt sind.

6. Ballenabrollmaschine nach Anspruch 5, dadurch gekennzeichnet, daß Zinken (1), die axialen Abstand voneinander aufweisen, in Umfangsrichtung um einen Winkel versetzt sind, der vom Umfangsabstand der Zinken (1), die in einer Normalebene zur Achse (2) liegen, unterschiedlich ist.
